(19) Europäisches Patentamt
European Patent Office
Office européen des brevets

(11) Veröffentlichungsnummer: **0 315 838**
**A1**

# (12) EUROPÄISCHE PATENTANMELDUNG

(21) Anmeldenummer: **88117970.9**

(51) Int. Cl.4: **C08G 75/02**

(22) Anmeldetag: **28.10.88**

(30) Priorität: **10.11.87 DE 3738142**

(43) Veröffentlichungstag der Anmeldung:
**17.05.89 Patentblatt 89/20**

(84) Benannte Vertragsstaaten:
**BE DE FR GB IT**

(71) Anmelder: **BAYER AG**

**D-5090 Leverkusen 1, Bayerwerk(DE)**

(72) Erfinder: **Dorf, Ernst-Ulrich, Dr.**
**Bodelschwinghstrasse 16**
**D-4150 Krefeld(DE)**
Erfinder: **Alfes, Franz, Dr.**
**Kruse Bömke 7**
**D-4150 Krefeld 1(DE)**
Erfinder: **Traenckner, Hans-Joachim, Dr.**
**Wedelstrasse 46**
**D-4150 Krefeld 1(DE)**

## (54) Verfahren zur Herstellung von Polyarylensulfiden mit definiert einstellbaren Schmelzviskositäten.

(57) Die Erfindung betrifft ein Verfahren zur Herstellung von Polyarylensulfiden, vorzugsweise Polyphenylensulfid (PPS) mit definiert einstellbaren Schmelzviskositäten aus Alkalisulfiden und Polyhalogenaromaten in einem polaren Lösungsmittel in Gegenwart eines Ketons oder Pinakons. Die so erhaltenen Polyarylensulfide mit definierten Schmelzviskositäten zeichnen sich durch eine hohe Stabilität der Schmelze und geringen Chlorgehalt aus. Sie verursachen geringe Korrosion an den bei ihrer Herstellung verwendeten Reaktionsgefäßen.

EP 0 315 838 A1

Xerox Copy Centre

## Verfahren zur Herstellung von Polyarylensulfiden mit definiert einstellbaren Schmelzviskositäten

Die Erfindung betrifft ein Verfahren zur Herstellung von Polyarylensulfiden, vorzugsweise Polyphenylensulfid (PPS) mit definiert einstellbaren Schmelzviskositäten aus Alkalisulfiden und Polyhalogenaromaten in einem polaren Lösungsmittel in Gegenwart eines Ketons oder Pinakons als Regler. Die so erhaltenen Polyarylensulfide mit definierten Schmelzviskositäten zeichnen sich durch eine hohe Stabilität der Schmelze und geringen Chlorgehalt aus. Sie verursachen geringe Korrosion an den bei ihrer Herstellung verwendeten Reaktionsgefäßen.

Polyarylensulfide und ihre Herstellung sind bekannt (z.B. US-PS 2 513 188, 3 117 620, 3 354 129). Bei der Herstellung von Polyarylensulfiden Polymere mit definierten Schmelzviskositäten zu erhalten, ist ebenfalls bekannt. Dies kann z.B. durch Zugabe von speziellen Monohalogenaromaten (DE-OS 3 529 498), speziellen Monomercaptoverbindungen (DE-OS 3 529 500), Monohalogenaromaten in Kombination mit Monomercaptoverbindungen (DE-OS 3 529 501), oligomeren Silylethern (DE-OS 3 541 688) oder Phenolen (DE-OS 3 601 215) zur Polymerisationsreaktion bewirkt werden.

Diese Verfahren haben verschiedene Nachteile, z.B. haben Monomercaptoverbindungen einen starken unangenehmen Geruch und sind leicht oxidiebar. Die oligomeren Silylether sind teuer, was ihren Einsatz nicht immer rechtfertigt. Monochloraromaten und Phenole zeigen nur bei relativ großen Einsatzmengen (ca. 1-5 Gew.-%) einen entsprechenden Effekt.

Es war daher wünschenswert, wirksame, billige und stabile Regler zur Verfügung zu haben.

Es wurde nun gefunden, daß Polyarylensulfide mit reproduzierbar einstellbaren Schmelzviskositäten hergestellt werden können, die sich durch eine hohe Stabilität der Schmelze, geringen Chlorgehalt und geringe Korrosion bei der Verarbeitung auszeichnen, wenn die Polymerisation in Gegenwart von bestimmten Ketonen und Pinakonen durchgeführt wird. Die so hergestellten Polyarylensulfide haben z.B. einen hohen Schmelzfluß und können direkt thermoplastisch verarbeitet werden.

Gegenstand der Erfindung ist daher ein Verfahren zur Herstellung von gegebenenfalls verzweigten Polyarylensulfiden aus

a) 50 bis 100 Mol-% Dihalogenaromaten der Formel (I)

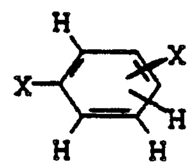

(I),

und 0 bis 50 Mol-% Dihalogenaromaten der Formel (II)

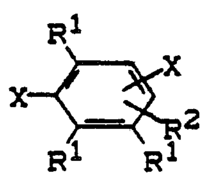

(II) ,

in denen

X für zueinander meta- und para-ständiges Halogen wie Chlor oder Brom steht und

$R^1$ und $R^2$ gleich oder verschieden ist und Wasserstoff, $C_1$-$C_4$-Alkylaryl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kan, wobei zwei zueinander orthoständige Reste $R^1$ zu einem aromatischen oder heterocyclischen, bis zu drei Heteroatome wie N, O, S enthaltenden Ring verknüpft sein können und immer ein Rest $R^1$ verschieden von Wasserstoff ist

und

b) 0 bis 5 Mol-%, bevorzugt 0,1 bis 2,5 Mol-%, bezogen auf die Summe der Dihalogenaromaten der Formel I und II, eines Tri- oder Tetrahalogenaromaten der Formel (III)

$ArX_n$ (III),

wobei

Ar ein aromatischer $C_6$-$C_{14}$-Rest oder ein heterocyclischer Rest mit 5 bis 14 Ringatomen ist, wobei bis zu 3

Ring-C-Atome durch Heteroatome wie N, O, S ersetzt sein können,
X für Halogen wie Chlor oder Brom steht und
n für die Zahl 3 oder 4 steht
und

c) 50 bis 100 Mol-% Alkalisulfid, bevorzugt Natrium-oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid und 0 bis 50 Mol-% Alkalibisulfid, bevorzugt Natrium- und Kaliumhydrogensulfid, oder deren Mischung, wobei das molare Verhältnis von (a+b):c im Bereich von 0,75:1 bis 1,25:1 liegen kann

und

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren in einem polaren organischen Lösungsmittel,

dadurch gekennzeichnet, daß dem Reaktionsgemisch 0,05 bis 3 Gew.-% bezogen auf zu erhaltendes Polyarylensulfid, bevorzugt 0,05 bis 2,5 Gew.-%, eines oder mehrerer Ketone der Formel IV und/oder eines oder mehrerer Pinakone der Formel V

$$R^1-C(O)-R^2$$

(IV)

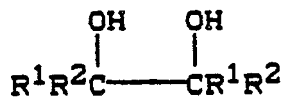

(V) ,

in welchen
$R^1$ und $R^2$ für $C_1$-$C_{10}$-Alkyl und $C_6$-$C_{24}$-Aryl stehen,
zugesetzt werden.

Die Alkalisulfide können in Form ihrer Hydrate und wäßrigen Mischungen oder wäßrigen Lösungen eingesetzt werden. Die Alkalisulfide können z.B. auch aus $H_2S$ und den Alkalihydroxiden erhalten werden.

Je nach Anteil an Alkalihydrogensulfid, das als Verunreinigung im Alkalisulfid in der Reaktionslösung enthalten ist, können zusätzlich bestimmte Anteile Alkalihyroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Die Entwässerung der Reaktionsmischung kann partiell oder vorzugsweise vollständig sein. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten selbst eingesetzt werden, erfolgen. Für die Entwässerung können alle Reaktionspartner gemischt werden und dann die Entwässerung des Gesamtgemisches durchgeführt werden. Das Alkalisulfid kann auch separat mit einem Teil der Reaktionskomponenten oder alleine entwässert werden.

In einer der möglichen Ausführungsformen der Reaktion werden z.B. die Reaktionspartner zusammen mit dem Reaktionsbeschleuniger bzw. einem Gemisch von Reaktionsbeschleunigern in Anwesenheit des polaren Lösungsmittels kontinuierlich unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Es können auch wasserfreie Alkalisulfide bzw. -hydrogensulfide eingesetzt werden. Sie können beispielsweise in einem separaten Verfahrensschritt entwässert worden sein. Die Sulfide können vorgelegt oder zu beliebigen Zeiten der Reaktion zudosiert werden.

Wird völlig entwässert oder wasserfreies Alkalisulfid bzw. -hydrogensulfid verwendet, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne varriiert werden. Sie kann von 1 bis 48 Stunden, bevorzugt 1 bis 18 Stunden betragen. Die Reaktionstemperaturen betragen 150 bis 300 °C, vorzugsweise 170 bis 280 °C.

Sollen verzweigte Polyarylensulfide hergestellt werden, sollten mindestens 0,05 Mol-% eines Tri- oder Tetrahalogenaromaten der Formel (III) eingesetzt werden.

Die Zugabe des Ketons bzw. der Ketone der Formel (IV) und/oder des Pinakons bzw. der Pinakone der

Formel (V) kann in verschiedener Art und Weise erfolgen. So können sie z.B. vorgelegt oder während der Reaktions- oder Nachkondensationszeit kontinuierlich zudosiert werden. Sie können auch z.B. in bestimmten Zeiträumen der Reaktions- oder Nachrührphase zudosiert oder portionsweise zugegeben werden. Es können auch Gemische der Ketone der Formel (IV) und/oder Pinakole der Formel (V) eingesetzt werden.

Beispiele für erfindungsgemäß einzusetzende Dihalogenaromaten der Formel (I) sind: P-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Toluol-2,5-dibrombenzol, 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri- bzw. Tetrahalogenaromaten der Formel (III) sind: 1,2,3-Trichlorbenzol, 1,2,4-Trichlorbenzol, 1,3,5-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4- Trichlortoluol, 2,3,6-Trichlortoluol, 1,2,3,4-Tetrachlornaphthalin, 1,2,4,5-Tetrachlorbenzol, 2,2′-4,4′-Tetrachlorbisphenyl, 1,3,5-Trichlortriazin.

Generell kan jedes polare Lösungsmittel für die Reaktion eingesetzt werden, das eine ausreichende Löslichkeit der organischen und gegebenenfalls anorganischen Reaktanden unter den Reaktionsbedingungen gewährleistet. Bevorzugt werden N-Alkyllactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielsweise finden als N-Alkyllactame Verwendung N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon usw. Sie können alleine oder als Mischung eingesetzt werden.

Erfindungsgemäß einsetzbare Ketone sind beispielsweise: Acetophenon, Benzophenon, Cyclohexylmethylketon, Propiophenon, Pivalophenon etc. Sie können einzeln oder als Mischung eingesetzt werden.

Erfindungsgemäß einsetzbare Pinakone sind beispielsweise: Tetraphenylethylenglykol, 2,3-Diphenylbutan-2,3-diol, 3,4-Diphenylhexan-3,4-diol, Pinakol etc. Sie können einzeln oder als Mischung eingesetzt werden.

Die Reaktion kann gegebenenfalls zusätzlich in Anwesenheit von üblichen Reaktionsbeschleunigern durchgeführt werden, z.B. in Anwesenheit von Alkalicarboxylaten (DE-AS 2 453 749), Lithiumhalogeniden oder Alkalicarboxylaten (DE-OS 2 623 362), Lithiumchlorid oder Lithiumcarboxylat (DE-OS 2 623 363), Alkalicarbonaten in Kombination mit Alkalicarboxylaten (US-PS 4 038 259), Lithiumacetat (DE-OS 2 623 333), Trialkaliphosphaten (DE-OS 2 930 710), Trialkaliphosphonaten (DE-OS 2 930 797), Alkalifluoriden (DE-OS 3 019 732), Alkali-Lithiumcarbonat (US 4 030 518), Aminosäuren (DE-OS 3 428 984), definierten Mengen Lactam (DE-OS 3 428 986) und N,N-Dialkylcarbonsäureamiden (DE-OS 3 120 538).

Die Aufarbeitung des Umsetzungsgemisches und die Isolierung der Polyarylensulfide können in bekannter Weise erfolgen. Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, bei spielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die erfindungsgemäß hergestellten Polyarylensulfide zeichnen sich durch definierte Schmelzviskositäten aus, die innerhalb eines engen Bereiches reproduziert werden können. Das ist insofern von großer Bedeutung, wenn bei der Verarbeitung der Polyarylensulfide Polymerschmelzen mit unterschiedlichem Fließverhalten eingestellt werden müssen. Diese müssen dem jeweiligen Verwendungszweck angepaßt sein. So können z.B. zur Herstellung von Folien und Fasern höhere Schmelzviskositäten als zur Einstellung von Glasfaser- bzw. Glasfaser/Mineral-verstärkten Spritzgußtypen notwendig sein. Produkte mit hohem Schmelzfluß, die trotzdem thermoplastisch verarbeitbar sind, können z.B. für komplizierte Formteile und zur Verkapselung elektronischer Bauteile geeignet sein.

Ein weiterer Vorteil der erfindungsgemäß hergestellten Polyarylensulfide ist z.B. ihre größte Stabilität bei thermischer Belastung, was bei ihrer thermoplastischen Verarbeitung vorteilhaft ist. Außerdem kann bei der thermoplastischen Verarbeitung anfallendes Regenerat wiederverwendet werden.

Der Chlorgehalt der erfindungsgemäß hergestellten Polymeren ist sehr gering. Sie zeigen praktisch keine saure Ausgasungen mehr und haben z.B. hohe elektrische Durchschlags- und Kriechstromfestigkeit.

Bei der thermoplastischen Verarbeitung oder bei Kontakt von PPS-Schmelzen mit Metalloberflächen wird im allgemeinen Korrosion beobachtet, die zu Verunreinigungen des PPS und zum Verschleiß von Verarbeitungsmaschinen führt. Bei den erfindungsgemäßen Verfahren ist auch bei hoher thermischer Belastung diese Korrosion reduziert.

Die erfindungsgemäß hergestellten Polyarylensulfide können mit anderen Polymeren wie Pigmenten und Füllstoffen - beispielsweise Graphit, Metallpulver, Glaspulver, Quarzmehl, Glasfasern oder Kohlefasern usw. -gemischt oder mit den für Polyarylensulfiden üblichen Additiven, beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5 kg-Gewichtes gemessen und in g/10 min angegeben. Bei hohen Schmelzflußwerten kann diese Messung jedoch aufgrund der hohen Ausflußrate der Polymerschmelze Schwierigkeiten bereiten. Es wurde deshalb die Schmelzvikosität $\eta_m$ der Polymerschmelze (in Pa.s) bei 306 °C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^1$ bis $10^7$ Pa.s bestimmen. In dem Instron-Rheometer wird das Polymer zwischen einer festen Platte und einem drehbaren Kegel geschmolzen. Aus der Winkelgeschwindigkeit und den apparativen Daten kann die Schmelzviskosität in Abhängigkeit von der Schubspannung errechnet werden. Verwendet wurde das Rheometer-Modell 3250 der Firma Instron, Durchmesser des Kegels und der Platte 2 cm. Angegeben wird die Schmelzviskosität, die bei einer Schubspannung von $\tau = 10^2$ Pa gemessen wird.

Die erfindungsgemäß hergestellten Polyarylensulfide besitzen nach der Isolierung aus dem Reaktionsgemisch Schmelzviskositäten zwischen 0,1 und 5 x $10^2$ Pa.s. Sie können in üblicher Weise verarbeitet werden, z.B. zu Folien, Fasern und vorzugsweise Spritzgießmassen. Diese können Verwendung finden z.B. als Automobilteile, Armaturen, Elektroteile, z.B. Schalter, elektronische Tafeln, chemikalienresistente und witterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc.

Beispiel 1

Dieses Beispiel beschreibt zum Vergleich die Herstellung von Polyphenylensulfid gemäß US-PS 3 354 129

In einem mit Rührern ausgerüsteten Autoklaven wurden 129 g Natriumsulfid-hydrat (entsprechend 1 mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C heruntergekühlt und 147 g p-Dichlorbenzol (= 1 Mol) in ca. 50 g N-Methyl-2-pyrrolidon hinzugefügt. Man erwärmt das Reaktionsgemisch unter einem Stickstoffvordruck von 2,5 bar in 30 min auf 245 °C und hält diese Temperatur 3 Stunden, wobei der Druck auf 14,5 bar ansteigt. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80 °C im Vakuum und erhält 100,3 (93 %) Poly-p-phenylensulfid mit einer Schmelzviskosität von $\eta_m$ = 4,5 Pa.s (gemessen bei $10^2$ Pa und 306 °C).

Der Gesamtchlorgehalt beträgt 0,56 % (bestimmt durch Wickbold-Verbrennung). Das Produkt ist nicht unmittelbar thermoplastisch verarbeitbar.

Beispeile 2-7

Zu 1850,5 g N-Methylcaprolactam und 882,0 g p-Dichlorbenzol in einem 4-l-Reaktor werden bei Temperaturen > 210 °C in 2 h unter gleichzeitiger Auskreisung von Wasser eine Schmelze von 813,9 g Natriumsulfidhydrat (60 % Natriumsulfid), 100 g Wasser, 8,1 g 45 %ige Natronlauge, 68,0 g $\epsilon$-Caprolactam,

74,0 g Natriumacetat and über einen separaten Tropftrichter verschiedene Mengen Tetraphenylethylenglykol (s. Tabelle) zugetropft, die jeweils mit N-Methylcaprolactam auf 100 g aufgefüllt sind. Nach einer Nachreaktionszeit von 13 h bei 230-235° wird der heiße Ansatz über eine Drucknutsche filtriert und in Wasser gefällt. Die anschließend sauer gestellte Fällmaische wird abgesaugt und nacheinander mit Wasser, zweimal Methylenchlorid und weiterem Wasser gewaschen und im Vakuum bei 80° C getrocknet.

Beispiele 8-11

Zu 2699,7 g N-Methylcaprolactam, 1223,1 g p-Dichlorbenzol und wechselnden Mengen Benzophenon (s. Tab.) in einem 5-l-Reaktor werden bei Temperaturen von 215° C in 4 h unter gleichzeitiger Auskreisung von Wasser eine Schmelze von 1147,5 g Natriumsulfidhydrat (60 % Natriumsulfid), 325 g Wasser, 4,3 g Natriumhydroxid und 141,2 g ε-Caprolactam zugetropft. Anschließend wird der Ansatz 9 h unter Rückfluß gehalten (Endtemperatur ca. 240° C). Das Reaktionsgemisch wird in 40 l Isopropanol gefällt, sauer gestellt und filtriert. Nach Wasserwäsche zur Entfernung des Kochsalzes wird im Vakuum bei 80° C getrocknet.

Tabelle

| Beispiel | g Zusatz | Gew.-% Zusatz (bez. auf PPS) | % Cl-Gehalt im PPs (n. Wickbold) | $\eta$m in Pa.s |
|---|---|---|---|---|
| 1 | - | - | 0,54 | 4,5 |
| Tetraphenylethylenglykol: | | | | |
| 2 | 0,65 | 0,1 | 0,08 | 95 |
| 3 | 0,65 | 0,1 | 0,12 | 105 |
| 4 | 3,25 | 0,5 | 0,11 | 10,2 |
| 5 | 3,25 | 0,5 | 0,16 | 9,0 |
| | | | | 3,0 |
| 7 | 6,50 | 1,0 | 0,11 | 1,2 |
| Benzophenon: | | | | |
| 8 | 0,90 | 0,1 | 0,28 | 8,5 |
| 9 | 4,50 | 0,5 | 0,29 | 0,4 |
| 10 | 22,70 | 2,5 | 0,34 | 0,1 |
| 11 | 22,70 | 2,5 | 0,24 | 0,1 |
| zum Vergleich | | | | |
| Chlordiphenylsulfon: (gemäß DE-OS 35 29 498, Bsp. 2,3,6-12) | | | | |
| | | 1,2 | | 145 |
| | | 1,8 | | 80 |
| | | 2,3 | | 63/66 |
| | | 3,5 | | 15/32/45-51 |
| | | 4,7 | | 13 |
| Chlordiphenylether (gemäß DE-OS 35 29 498, Bsp.5): | | | | |
| | | 1,5 | | 250 |
| Phenol (gemäß DE-OS 36 01 215, Bsp. 1,3-5): | | | | |
| | | 0,4 | | 210 |
| | | 1,4 | | 45/52 |
| | | 2,2 | | 12 |
| Isooctylphenyl (gemäß DE-OS 36 01 215, Bsp. 6): | | | | |
| | | 2,9 | | 44 |

## Ansprüche

1. Verfahren zur Herstellung von gegebenenfalls verzweigten Polyarylensulfiden aus
a) 50 bis 100 Mol-% Dihalogenaromaten der Formel (I)

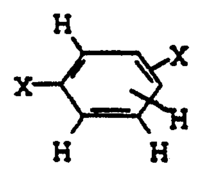

(I),

und 0 bis 50 Mol-% Dihalogenaromaten der Formel (II)

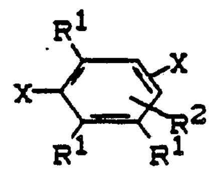

(II),

in denen
X für zueinander meta- und para-ständiges Halogen wie Chlor oder Brom steht und
$R^1$ und $R^2$ gleich oder verschieden ist und Wasserstoff, $C_1$-$C_4$-Alkylaryl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocycli schen, bis zu drei Heteroatomen wie N, O, S enthaltenden Ring verknüpft sein können und immer ein Rest $R^1$ verschieden von Wasserstoff ist.
und
b) 0 bis 5 Mol-%, bevorzugt 0,1 bis 2,5 Mol-%, bezogen auf die Summe der Dihalogenaromaten der Formel I und II, eines Tri- oder Tetrahalogenaromaten der Formel (III)
$ArX_n$ (III),
wobei
Ar ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
X für Halogen wie Chlor oder Brom steht und
n für die Zahl 3 oder 4 steht
und
c) 50 bis 100 Mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid und 0 bis 50 Mol-% Alkalibisulfid, bevorzugt Natrium- und Kaliumhydrogensulfid, oder deren Mischung, wobei das molare Verhältnis von (a+b):c im Bereich von 0,75:1 bis 1,25:1 liegen kann
und
d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N- Dialkylcarbonsäureamiden, Lactamen, Anhydriden und Estern von Carbonsäuren in einem polaren organischen Lösungsmittel, dadurch gekennzeichnet, daß dem Reaktionsgemisch 0,05 bis 3 Gew.-% bezogen auf zu erhaltendes Polyarylensulfid, bevorzugt 0,05 bis 2,5 Gew.-%, eines oder mehrerer Ketone der Formel IV und/oder eines oder mehrerer Pinakone der Formel V

$$R^1\text{-C(O)-}R^2$$

(IV)

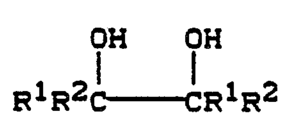

(V) ,

in welchen

$R^1$ und $R^2$ für $C_1$-$C_{10}$-Alkyl und $C_6$-$C_{24}$-Aryl stehen, zugesetzt werden.

2. Verfahren nach Anspruch 1, dadurch gekennzeichnet, daß die Reaktionspartner und das polare organische Lösungsmittel einzeln oder in Mischungen bzw. Lösungen bei Temperaturen > 200 °C unter gleichzeitiger Entwässerung zusammengeführt und zur Reaktion gebracht werden.

3. Verfahren nach Anspruch 1, dadurch gekennzeichnet, daß die Reaktionspartner und das polare organische Lösungsmittel wasserfrei einzeln oder in Mischungen bzw. Lösungen zusammengeführt und bei Temperaturen > 200 °C zur Reaktion gebracht werden, wobei die Zusammenführung vor oder im Verlauf der Reaktion durchgeführt werden kann.

4. Verfahren nach Anspruch 1, dadurch gekennzeichnet, daß die Reaktion in Abwesenheit von Wasser durchgeführt wird.

5. Verfahren nach Anspruch 1, dadurch gekennzeichnet, daß N-Alkyllactame als polares organisches Lösungsmittel Verwendung finden.

6. Verfahren nach Anspruch 1, dadurch gekennzeichnet, daß Benzophenon als Keton Verwendung findet.

7. Verwendung nach Anspruch 1 oder 2, dadurch gekennzeichnet, daß Tetraphenylethylenglykol als Pinakon Verwendung findet.

Europäisches Patentamt

# EUROPÄISCHER RECHERCHENBERICHT

Nummer der Anmeldung

EP 88 11 7970

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 214 471 (BAYER) * Ansprüche 1 - 5, 8; Seite 15, Zeilen 15 - 17 * & DE - A - 35 29498 (Cat. D) | 1 - 5 | C 08 G 75/02 |
| A | EP-A-0 229 626 (BAYER) * Ansprüche * & DE - A - 36 01215 (Cat. D) | 1 - 5 | |
| A | EP-A-0 171 021 (BAYER) * Ansprüche * | 1 - 5 | |
| A | US-A-4 490 522 (KAWABATA et al.) * Ansprüche 1, 2 * | 1 | |
| A | EP-A-0 070 010 (SIEMENS) * Seite 9, Zeile 5; Anspruch 9 * | 1, 6 | |

RECHERCHIERTE SACHGEBIETE (Int. Cl.4)

C 08 G 75/00

Der vorliegende Recherchenbericht wurde für alle Patentansprüche erstellt

| Recherchenort | Abschlußdatum der Recherche | Prüfer |
|---|---|---|
| BERLIN | 01-02-1989 | BOEKER R.B. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)